# EUROPÄISCHE PATENTANMELDUNG

(11) **EP 0 694 589 A1**
(43) Veröffentlichungstag der Anmeldung: **31.01.1996**
(21) Anmeldenummer: 95111066.7
(22) Anmeldetag: 14.07.1995
(51) Int. Cl.: C09B 62/513, C09B 62/09

(54) **Wasserlösliche Disazoverbindungen, Verfahren zu ihrer Herstellung und ihre Verwendung als Farbstoffe**

(30) Priorität: 25.07.1994 DE 4426322
(71) Anmelder: HOECHST AKTIENGESELLSCHAFT, D-65929 Frankfurt am Main (DE)
(72) Erfinder: Dannheim, Jörg, Dr., D-60489 Frankfurt am Main (DE); Russ, Werner Hubert, Dr., D-65439 Flörsheim (DE)

(57) **Zusammenfassung**

Es werden wasserlösliche Disazoverbindungen der nachstehend angegebenen und definierten allgemeinen Formel (1) beschrieben, die sich als faserreaktive Farbstoffe zum Färben von hydroxy- und/oder carbonamidgruppenhaltigem Material, insbesondere Fasermaterial, wie Cellulosefasern, Wolle und synthetisches Polyamid, eignen. 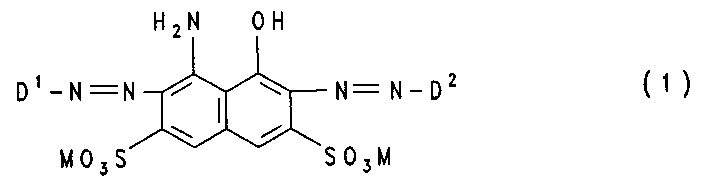
worin bedeuten: M ist Wasserstoff oder ein Alkalimetall, D¹ ist ein Rest der allgemeinen Formel (2a) oder (2b) und D² ist eine Gruppe der allgemeinen Formel (3) 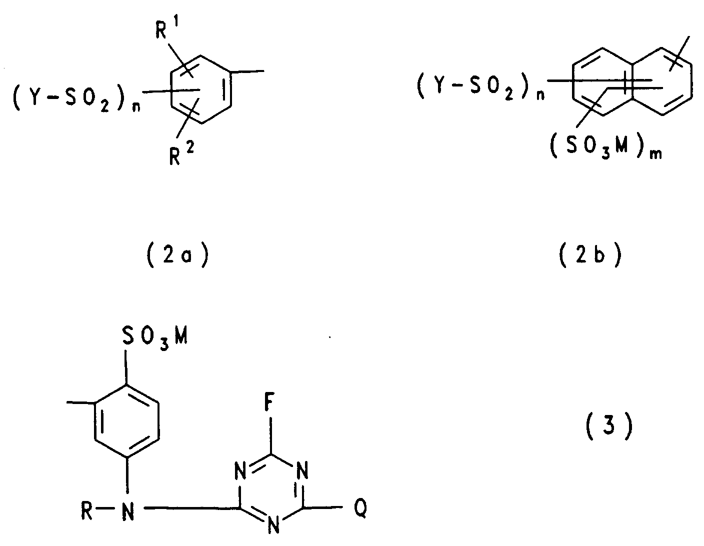
in welchen Y-SO₂- eine faserreaktive Gruppe der Vinylsulfonreihe ist, n die Zahl 1 oder 2 ist, R¹ Wasserstoff, Halogen, niederes Alkyl, niederes Alkoxy, Sulfo oder Carboxy ist, R² Wasserstoff, Chlor, niederes Alkyl oder niederes Alkoxy ist, m die Zahl Null, 1 oder 2 ist, R Wasserstoff oder niederes Alkyl ist und Q niederes Alkoxy, das durch niederes Alkoxy substituiert sein kann, oder Amino, Alkylamino oder Dialkylamino ist, deren Alkylreste durch niederes Alkoxy substituiert sein können, oder den Rest eines gesättigten 5- bis 8-gliedrigen Heterocyclus darstellt.

## Beschreibung

Die Erfindung liegt auf dem technischen Gebiet der faserreaktiven Azofarbstoffe.

Aus den U.S.-Patentschriften Nos. 4 649 193 und 5 241 057 sind Disazofarbstoffe mit faserreaktiven Farbstoffeigenschaften bekannt, die beispielsweise Baumwolle in dunkelblauen bis schwarzen Nuancen färben. Sie besitzen jedoch anwendungstechnische Mängel; insbesondere ist deren Farbstärke und Aufbauverhalten verbesserungswürdig.

Mit der vorliegenden Erfindung wurden nunmehr neue Disazoverbindungen mit verbesserten Eigenschaften gefunden, die der allgemeinen Formel (1) 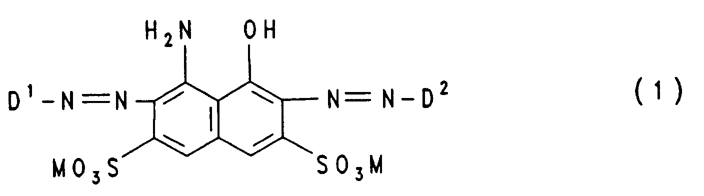
entsprechen, in welcher bedeuten:
- M: ist Wasserstoff oder ein Alkalimetall, wie Natrium, Kalium oder Lithium;
- D¹: ist ein Rest der allgemeinen Formel (2a) oder (2b)

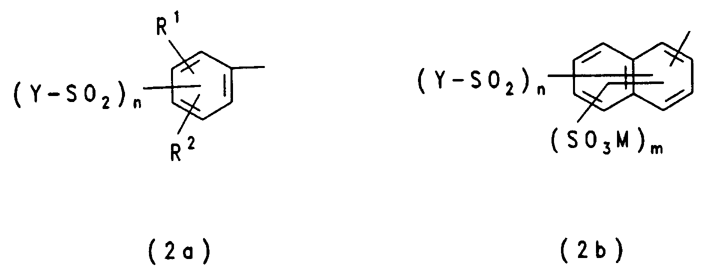

in welchen
- Y: Vinyl ist oder Ethyl ist, das in β-Stellung durch einen Substituenten substituiert ist, der durch Alkali unter Bildung der Vinylgruppe eliminierbar ist,
- n: die Zahl 1 oder 2, bevorzugt 1, ist,
- R¹: Wasserstoff, Halogen, wie Brom oder Chlor, Alkyl von 1 bis 4 C-Atomen, wie Ethyl und insbesondere Methyl, Alkoxy von 1 bis 4 C-Atomen, wie Ethoxy und insbesondere Methoxy, Sulfo oder Carboxy ist und bevorzugt Wasserstoff, Alkyl von 1 bis 4 C-Atomen oder Alkoxy von 1 bis 4 C-Atomen bedeutet,
- R²: Wasserstoff, Chlor, Alkyl von 1 bis 4 C-Atomen, wie Ethyl und insbesondere Methyl, oder Alkoxy von 1 bis 4 C-Atomen, wie Ethoxy und insbesondere Methoxy, ist und bevorzugt Wasserstoff oder Alkoxy von 1 bis 4 C-Atomen bedeutet,
- m: die Zahl Null, 1 oder 2 ist (wobei im Falle von m gleich Null diese Gruppe Wasserstoff bedeutet) und bevorzugt 1 oder 2 ist und
- M: die obengenannte Bedeutung besitzt;
D² ist eine Gruppe der allgemeinen Formel (3) 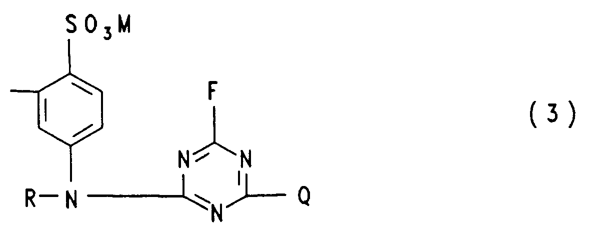
in welcher
- M: die obengenannte Bedeutung hat,
- R: Wasserstoff oder Alkyl von 1 bis 4 C-Atomen, wie Methyl und Ethyl, ist und bevorzugt Wasserstoff bedeutet und
- Q: Alkoxy von 1 bis 4 C-Atomen, wie Methoxy oder Ethoxy, bedeutet oder Alkoxy von 2 bis 4 C-Atomen, wie Ethoxy, ist, das durch Alkoxy von 1 bis 4 C-Atomen, wie Methoxy oder Ethoxy, substituiert ist, oder eine Gruppe der allgemeinen Formel (4)

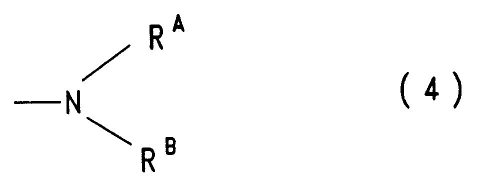

ist, in welcher
- R^{A}: Wasserstoff oder Alkyl von 1 bis 6 C-Atomen, bevorzugt von 1 bis 4 C-Atomen, wie Ethyl und Methyl, ist, das durch Alkoxy von 1 bis 4 C-Atomen, wie Methoxy und Ethoxy, substituiert sein kann, und
- R^{B}: eine der Bedeutungen von R^{A} hat oder die Gruppe -NR^{A}R^{B} den Rest eines gesättigten 5- bis 8-gliedrigen, gegebenenfalls eine weitere Heterogruppe, wie -O- oder -NH-, enthaltenden Heterocyclus bildet, wie beispielsweise N-Morpholino, N-Piperazino oder N-Piperidino.

In Formel (2a) steht die Gruppe Y-SO₂-, sofern n gleich 1 ist, bevorzugt in meta- oder para-Stellung zur freien Bindung an den Benzolkern gebunden. In Formel (2b) steht die freie Bindung, die zur Azogruppe führt, bevorzugt in β-Stellung an den Naphthalinkern gebunden.

In den obigen allgemeinen Formeln als auch in den nachfolgenden allgemeinen Formeln können die einzelnen Formelglieder im Rahmen ihrer Bedeutung voneinander gleiche oder voneinander verschiedene Bedeutungen besitzen.

Alkalisch eliminierbare Substituenten, die in β-Stellung der Ethylgruppe von Y stehen, sind beispielsweise Halogenatome, wie Brom und Chlor, Estergruppen organischer Carbon- und Sulfonsäuren, wie von Alkylcarbonsäuren, gegebenenfalls substituierter Benzolcarbonsäuren und gegebenenfalls substituierter Benzolsulfonsäuren, wie die Gruppen Alkanoyloxy von 2 bis 5 C-Atomen, hiervon insbesondere Acetyloxy, Benzoyloxy, Sulfobenzoyloxy, Phenylsulfonyloxy und Toluylsulfonyloxy, des weiteren saure Estergruppen anorganischer Säuren, wie der Phosphorsäure, Schwefelsäure und Thioschwefelsäure (Phosphato-, Sulfato- und Thiosulfatogruppen), ebenso Dialkylaminogruppen mit Alkylgruppen von jeweils 1 bis 4 C-Atomen, wie Dimethylamino und Diethylamino. Bevorzugt ist Y Vinyl, β-Chlorethyl und insbesondere bevorzugt β-Sulfatoethyl.

Die Gruppen "Sulfo", "Carboxy", "Thiosulfato", "Phosphato" und "Sulfato" schließen sowohl deren Säureform als auch deren Salzform ein. Demgemäß bedeuten Sulfogruppen Gruppen entsprechend der allgemeinen Formel -SO₃M , Thiosulfatogruppen Gruppen entsprechend der allgemeinen Formel -S-SO₃M , Carboxygruppen Gruppen entsprechend der allgemeinen Formel -COOM, Phosphatogruppen Gruppen entsprechend der allgemeinen Formel -OPO₃M₂ und Sulfatogruppen Gruppen entsprechend der allgemeinen Formel -OSO₃M , jeweils mit M der obengenannten Bedeutung.

Gruppen der allgemeinen Formel (2a) sind beispielsweise 2-(β-Sulfatoethylsulfonyl)-phenyl, 3-(β-Sulfatoethylsulfonyl)-phenyl, 4-(β-Sulfatoethylsulfonyl)-phenyl, 2-Carboxy-5-(β-sulfatoethylsulfonyl)-phenyl, 2-Chlor-3-(sulfatoethylsulfonyl)-phenyl, 2-Chlor-4-(β-sulfatoethylsulfonyl)-phenyl, 2-Brom-4-(β-sulfatoethylsulfonyl)-phenyl, 4-Methoxy-3-(β-sulfatoethylsulfonyl)-phenyl, 4-Chlor-3-(β-sulfatoethylsulfonyl)-phenyl, 2-Ethoxy-4- oder -5-(β-sulfatoethylsulfonyl)-phenyl, 2-Methyl-4-(β-sulfatoethylsulfonyl)-phenyl, 2-Methoxy-5- oder -4-(β-sulfatoethylsulfonyl)-phenyl, 2,4-Diethoxy-5-(β-sulfatoethylsulfonyl)-phenyl, 2,4-Dimethoxy-5-(β-sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl, 2- oder 3- oder 4-(β-Thiosulfatoethylsulfonyl)-phenyl, 2-Methoxy-5-(β-thiosulfatoethylsulfonyl)-phenyl, 2-Sulfo-4-(β-phosphatoethylsulfonyl)-phenyl, 2-Sulfo-4-vinylsulfonyl-phenyl, 2-Chlor-4- oder -5-(β-chlorethylsulfonyl)-phenyl, 3- oder 4-(β-Acetoxyethylsulfonyl)-phenyl, 5-(β-Sulfatoethylsulfonyl)-naphth-2-yl, 6- oder 7- oder 8-(β-Sulfatoethylsulfonyl)-naphth-2-yl, 6-(β-Sulfatoethylsulfonyl)-1-sulfo-naphth-2-yl, 6-(β-Sulfatoethylsulfonyl)-8-sulfo-naphth-2-yl, 5-(β-Sulfatoethylsulfonyl)-1-sulfo-naphth-2-yl und 8-(β-Sulfatoethylsulfonyl]-6-sulfo-naphth-2-yl, bevorzugt hiervon 4-(β-Sulfatoethylsulfonyl)-phenyl, 3-(β-Sulfatoethylsulfonyl)-phenyl, 2,5-Dimethoxy-4-(β-sulfatoethylsulfonyl)-phenyl, 2-Methoxy-5-methyl-4-(β-sulfatoethylsulfonyl)-phenyl, 2-Methoxy-5-(β-sulfatoethylsulfonyl)-phenyl, 4-Vinylsulfonyl-phenyl, 3-Vinylsulfonyl-phenyl und 2-Sulfo-4-(β-sulfatoethylsulfonyl)-phenyl.

Gruppen entsprechend dem Formelrest Q sind beispielsweise Amino (-NH₂), Methylamino, Ethylamino, Propylamino, Butylamino, Isopropylamino, 1-Methyl-butylamino, 2-Methyl-butylamino, Dimethylamino, Diethylamino, N-Methyl-propylamino, N-Methyl-butylamino, Dipropyl-amino, (β-Methoxy-ethyl)-amino, (β-Ethoxy-ethyl)-amino, (β-Methoxy-propyl)-amino, (γ-Methoxy-propyl)-amino, Piperidino, Morpholino, Methoxy, Ethoxy und Isopropoxy.

Die vorliegende Erfindung betrifft weiterhin Verfahren zur Herstellung der erfindungsgemäßen Disazoverbindungen der allgemeinen Formel (1). Diese sind dadurch gekennzeichnet, daß man eine Aminoverbindung der allgemeinen Formel H₂N-D² mit D² der obengenannten Bedeutung in an und für sich bekannter Verfahrensweise diazotiert, beispielsweise bei -5°C bis + 15°C in stark saurem wäßrigem Medium unterhalb einem pH-Wert von 1,5 mittels Alkalinitrit, und die erhaltene Diazoniumverbindung mit einer Azoverbindung der allgemeinen Formel (5) 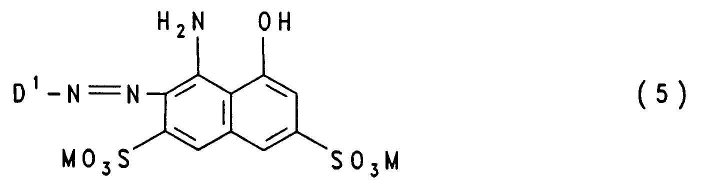
mit D¹ und M der obengenannten Bedeutung in an und für sich bekannter Verfahrensweise, beispielsweise bei einem pH-Wert von 5 bis 9, bevorzugt von 6 bis 7,5, und bei einer Temperatur zwischen 0 und 15°C, bevorzugt zwischen 5 und 10°C, kuppelt, oder daß man eine Verbindung der allgemeinen Formel (6) 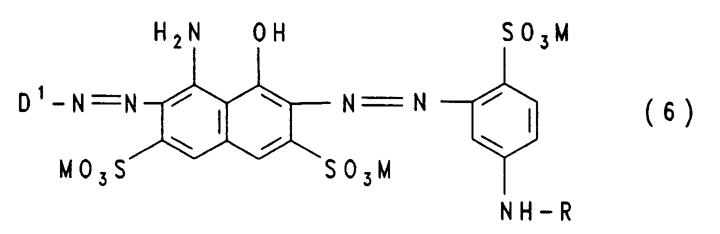
in welcher D¹, M und R die obengenannten Bedeutungen haben, mit Cyanurfluorid (2,4,6-Trifluor-1,3,5-triazin) bei einer Temperatur zwischen -5°C und +20°C, bevorzugt zwischen 0 und 10°C, und einem pH-Wert zwischen 4 und 8, bevorzugt zwischen 5 und 7, zur Difluor-triazinylamino-Disazoverbindung und diese anschließend mit einer Verbindung der allgemeinen Formel H-Q mit Q der obengenannten Bedeutung bei einer Temperatur zwischen -5°C und +20°C, bevorzugt zwischen 0 und 10°C, und bei einem pH-Wert zwischen 5 und 10, bevorzugt zwischen 7 und 9, umsetzt, oder daß man eine Verbindung der allgemeinen Formel (6) mit einer Verbindung der allgemeinen Formel (7) 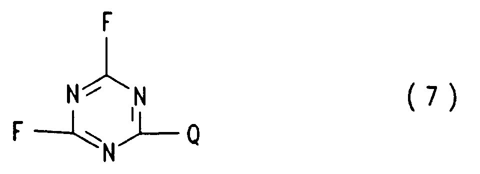
in welcher Q die obengenannte Bedeutung besitzt, bei einem pH-Wert zwischen 3 und 8, bevorzugt zwischen 5 und 7, und bei einer Temperatur zwischen 5 und 30°C, bevorzugt zwischen 10 und 20°C, umsetzt.

Die Ausgangsverbindungen der allgemeinen Formel (5) sind bekannt und lassen sich in üblicher Weise durch Umsetzung des Diazoniumsalzes des Amins der allgemeinen Formel D¹-NH₂ mit 1-Amino-8-naphthol-3,6-disulfonsäure herstellen. Ebenso sind die Verbindungen der allgemeinen Formel (6) bekannt. Sie lassen sich beispielsweise herstellen, indem man eine Aminoverbindung der allgemeinen Formel (8) 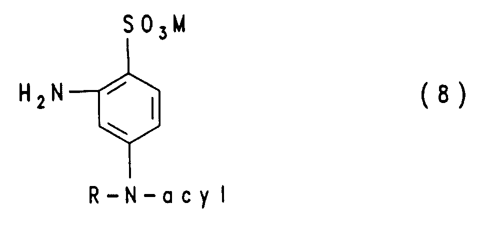
in welcher M und R die obengenannten Bedeutungen haben und acyl einen Alkanoylrest von 2 bis 5 C-Atomen, wie den Acetylrest, bedeutet, in an und für sich bekannter Verfahrensweise, wie beispielsweise bei -5°C bis + 15°C, diazotiert und mit einer Verbindung der allgemeinen Formel (5) bei einem pH-Wert zwischen 5 und 7,5 und einer Temperatur zwischen 5 und 20°C kuppelt und in der so erhaltenen Disazoverbindung die Acylaminogruppe durch alkalische Hydrolyse bei einem pH-Wert zwischen 10 und 14, bevorzugt zwischen 11 und 13, in die freie Aminogruppe überführt. Bei dieser alkalischen Hydrolysereaktion kann in der Ausgangs-Disazoverbindung die Gruppe Y-SO₂- in die β-Hydroxyethylsulfonyl-Gruppe übergeführt werden, weswegen auch bei dieser Verfahrensvariante von einer Verbindung entsprechend der allgemeinen Formel (5) ausgegangen werden kann, in welcher die Gruppe Y-SO₂- bereits die β-Hydroxyethylsulfonyl-Gruppe ist. Die aminogruppenhaltige Disazoverbindung mit der β-Hydroxyethylsulfonyl-Gruppe kann mittels konzentrierter Schwefelsäure bei einer Temperatur zwischen 0 und 5°C in die Verbindung der allgemeinen Formel (6) mit Y gleich β-Sulfatoethyl übergeführt werden. Die Entacyclierung der Ausgangsverbindung zur Verbindung der allgemeinen Formel (6) kann auch in der Weise erfolgen, daß man die Acylamino-Disazoverbindung zunächst bei einer Temperatur zwischen 0 und 20°C, bevorzugt zwischen 10 und 15°C, und bei einem pH-Wert zwischen 11 und 13, bevorzugt 12 und 12,5, unter Bildung der Vinylgruppe aus der bestehenden Gruppe Y in die noch acylaminogruppenhaltige Vinylsulfonyl-Disazoverbindung überführt und diese in wäßrigem Medium bei einem pH-Wert unterhalb von 1 und einer Temperatur zwischen 90 und 100°C entacyliert.

Die Ausgangsverbindungen der allgemeinen Formel H₂N-D² lassen sich analog bekannten Verfahrensweisen herstellen, wie beispielsweise durch Umsetzung eines Amins der allgemeinen Formel (9) 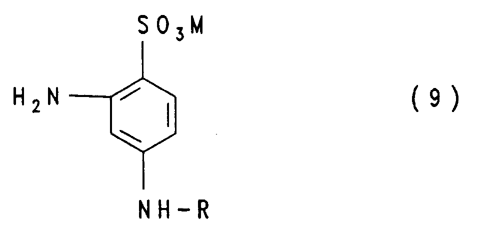
mit R und M der obengenannten Bedeutung mit Cyanurfluorid analog den Angaben der deutschen Offenlegungsschrift 2 746 109 und anschließender Umsetzung der erhaltenen Difluortriazinylamino-sulfoanilin-Verbindung mit einer Verbindung der allgemeinen Formel H-Q bei einer Temperatur zwischen 0 und 20°C und einem pH-Wert zwischen 6 und 10. Eine andere Möglichkeit der Synthese der Ausgangsverbindungen der allgemeinen Formel H₂N-D² kann darin bestehen, daß man eine Verbindung der allgemeinen Formel (7) mit einer Verbindung der allgemeinen Formel (9) in wäßriger Lösung oder Suspension bei einer Temperatur zwischen 5 und 30°C, bevorzugt zwischen 10 und 20°C, und bei einem pH-Wert zwischen 4 und 8, bevorzugt zwischen 5 und 7, umsetzt.

Die Ausgangsverbindungen der allgemeinen Formel (7) selbst lassen sich beispielsweise analog den Angaben der französischen Patentschrift 1 561 876 oder gemäß J. Org. Chem. 27, 2509 (1962) herstellen.

Die Abscheidung der erfindungsgemäß hergestellten Verbindungen der allgemeinen Formel (1) - im nachfolgenden Verbindungen (1) genannt - aus den Syntheseansätzen erfolgt nach allgemein bekannten Methoden entweder durch Ausfällen aus dem Reaktionsmedium mittels Elektrolyten, wie beispielsweise Natriumchlorid oder Kaliumchlorid, oder durch Eindampfen der Reaktionslösung, beispielsweise durch Sprühtrocknung, wobei dieser Reaktionslösung eine Puffersubstanz zugeführt werden kann. Die Verbindungen (1) haben faserreaktive Eigenschaften und besitzen sehr gute Farbstoffeigenschaften. Sie können deshalb zum Färben von hydroxy- und/oder carbonamidgruppenhaltigem Material, insbesondere Fasermaterial, wie auch von Leder, verwendet werden. Ebenso können auch die bei der Synthese der erfindungsgemäßen Verbindungen anfallenden Lösungen, gegebenenfalls nach Zusatz einer Puffersubstanz und gegebenenfalls nach Konzentrierung, direkt als Flüssigpräparation der färberischen Verwendung zugeführt werden.

Gegenstand der vorliegenden Erfindung ist deshalb auch die Verwendung der Verbindungen (1) zum Färben von hydroxy- und carbonamidgruppenahltigen Materialien bzw. Verfahren zu deren Anwendung auf diesen Substraten. Eingeschlossen sind hierbei die Massefärbung, beispielsweise Folien aus Polyamid, und die Druckfärbung. Bevorzugt kommen die Materialien in Form von Fasermaterialien zur Anwendung, insbesondere als Textilfasermaterialien, wie in Form von Geweben oder als Garne, wie in Form von Strängen und Wickelkörpern.

Hydroxygruppenhaltige Materialien sind natürliche oder synthetische hydroxygruppenhaltige Materialien, wie beispielsweise Cellulosefasermaterialien oder deren Regeneratprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und viskose Kunstseide.

Carbonamidgruppenhaltige Materialien sind beispielsweise synthetische und natürliche Polyamide und Polyurethane, insbesondere in Form der Fasern, beispielsweise Wolle und andere Tierhaare, Seide, Leder, Polyamid-6,6, Polyamid-6, Polyamid-11 und Polyamid-4.

Die Verbindungen (1) lassen sich auf den genannten Substraten, insbesondere auf den genannten Fasermaterialien, nach den für wasserlösliche Farbstoffe, insbesondere für faserreaktive Farbstoffe, bekannten Anwendungstechniken applizieren und fixieren. So erhält man mit ihnen auf Cellulosefasern nach den Ausziehverfahren aus langer Flotte unter Verwendung von verschiedensten säurebindenden Mitteln und gegebenenfalls neutralen Salzen, wie Natriumchlorid oder Natriumsulfat, Färbungen mit sehr guten Farbausbeuten sowie ausgezeichnetem Farbaufbau bei hohen Fixiergraden. Man färbt bei Temperaturen zwischen 40 und 105°C, gegebenenfalls bei Temperaturen bis zu 120°C unter Druck, und gegebenenfalls in Gegenwart von üblichen Färbereihilfsmitteln im wäßrigen Bad. Man kann dabei so vorgehen, daß man das Material in das warme Bad einbringt und dieses allmählich auf die gewünschte Färbetemperatur erwärmt und den Färbeprozeß bei dieser Temperatur zu Ende führt. Die das Ausziehen der Verbindungen (1) beschleunigenden Neutralsalze können dem Bade gewünschtenfalls auch erst nach Erreichen der eigentlichen Färbetemperatur zugesetzt werden.

Nach dem Klotzverfahren werden auf Cellulosefasern ebenfalls ausgezeichnete Farbausbeuten mit hohen Fixiergraden und ein sehr guter Farbaufbau erhalten, wobei durch Verweilen bei Raumtemperatur oder erhöhter Temperatur, beispielsweise bis zu etwa 60°C, durch Dämpfen oder mit Trockenhitze in üblicher Weise fixiert werden kann.

Ebenfalls erhält man nach den üblichen Druckverfahren für Cellulosefasern, die entweder einphasig durchgeführt werden können, beispielsweise durch Bedrucken mit einer Natriumcarbonat oder ein anderes säurebindendes Mittel und die Verbindung (1) enthaltenden Druckpaste und durch anschließendes Dämpfen bei 100 bis 103°C, oder die zweiphasig, beispielsweise durch Bedrucken mit neutraler oder schwach saurer, das Farbmittel enthaltenden Druckpaste und anschließendes Fixieren entweder durch Hindurchführen der bedruckten Ware durch ein heißes elektkrolythaltiges alkalisches Bad oder durch Überklotzen mit einer alkalischen elektkrolythaltigen Klotzflotte mit anschließendem Verweilen dieses behandelten Materials oder anschließendem Dämpfen oder anschließender Behandlung mit Trockenhitze, durchgeführt werden können, farbstarke Drucke mit gutem Stand der Konturen und einem klaren Weißfond. Der Ausfall der Drucke ist von wechselnden Fixierbedingungen nur wenig abhängig. Sowohl in der Färberei als auch in der Druckerei sind die mit den Verbindungen (1) erhaltenen Fixiergrade sehr hoch.

Bei der Fixierung mittels Trockenhitze nach den üblichen Thermofixierverfahren verwendet man Heißluft von 120 bis 200°C. Neben dem üblichen Wasserdampf von 101 bis 103°C kann auch überhitzter Dampf und Druckdampf von Temperaturen bis zu 160°C eingesetzt werden.

Die säurebindenden und die Fixierung der Verbindungen (1) auf den Cellulosefasern bewirkenden Mittel sind beispielsweise wasserlösliche basische Salze der Alkalimetalle und der Erdalkalimetalle von anorganischen oder organischen Säuren, ebenso Verbindungen, die in der Hitze Alkali freisetzen. Insbesondere sind die Alkalilmetallhydroxide und Alkalimetallsalze von schwachen bis mittelstarken anorganischen oder organischen Säuren zu nennen, wobei von den Alkaliverbindungen vorzugsweise die Natrium- und Kaliumverbindungen gemeint sind. Solche säurebindenden Mittel sind beispielsweise Natriumhydroxid, Kaliumhydroxid, Natriumcarbonat, Natriumbicarbonat, Kaliumcarbonat, Natriumformiat, Natriumdihydrogenphosphat, Dinatriumhydrogenphosphat, Natriumtrichloracetat, Wasserglas oder Trinatriumphosphat.

Durch die Behandlung der Verbindungen (1) mit den säurebindenden Mitteln, gegebenenfalls unter Wärmeeinwirkung, werden diese chemisch an die Cellulosefaser gebunden; insbesondere die Cellulosefärbungen zeigen nach der üblichen Nachbehandlung durch Spülen zur Entfernung von nicht fixierten Anteilen der Verbindungen (1) ausgezeichnete Naßechtheiten, zumal sich solche nicht fixierten Anteile leicht wegen ihrer guten Kaltwasserlöslichkeit auswaschen lassen.

Die Färbungen auf Polyurethan- und Polyamidfasern werden üblicherweise aus saurem Milieu ausgeführt. So kann man beispielsweise dem Färbebad Essigsäure und/oder Ammoniumsulfat und/oder Essigsäure und Ammonmiumacetat oder Natriumacetat zufügen, um den gewünschten pH-Wert zu erhalten. Zwecks Erreichung einer brauchbaren Egalität der Färbung empfiehlt sich ein Zusatz an üblichen Egalisierhilfsmitteln, wie beispielsweise auf Basis eines Umsetzungsproduktes von Cyanurchlorid mit der dreifachen molaren Menge einer Aminobenzolsulfonsäure und/oder einer Aminonaphthalinsulfonsäure oder auf Basis eines Umsetzungsproduktes von beispielsweise Stearylamin mit Ethylenoxid. In der Regel wird das zu färbende Material bei einer Temperatur von etwa 40°C in das Bad eingebracht, dort einige Zeit darin bewegt, das Färbebad dann auf den gewünschten schwach sauren, vorzugsweise schwach essigsauren, pH-Wert nachgestellt und die eigentliche Färbung bei einer Temperatur zwischen 60 und 98°C durchgeführt. Die Färbungen können aber auch bei Siedetemperatur oder bei Temperaturen bis zu 120°C (unter Druck) ausgeführt werden.

Die mit den Verbindungen (1) hergestellten Färbungen und Drucke zeichnen sich durch klare Nuancen aus. Insbesondere die Färbungen und Drucke auf Cellulosefasermaterialien besitzen, wie bereits erwähnt, darüber hinaus eine hohe Farbstärke, eine gute Lichtechtheit und sehr gute Naßechtheiten, wie Wasch-, Walk-, Wasser-, Seewasser-, Überfärbe- und Schweißechtheiten, des weiteren eine gute Plissierechtheit, Bügelechtheit und Reibechtheit.

Besonders hervorzuheben sind die mit den erfindungsgemäßen Farbstoffen auf Cellulosefasermaterialien erzielbaren hohen Fixierausbeuten, die bei der Anwendung nach Druckverfahren und Klotzfärbeverfahren über 90 % betragen können. Ein weiterer Vorteil der Verbindungen (1) besteht in der leichten Auswaschbarkeit der beim Druck- oder Färbevorgang nicht fixierten Anteile, wodurch der Waschvorgang der bedruckten oder gefärbten Cellulosefasermaterialien mit geringen Waschflottenmengen und gegebenenfalls einer energiesparenden Temperaturführung während des Waschvorganges bewerkstelligt werden kann.

Die nachfolgenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säure angegeben; im allgemeinen werden sie in Form ihrer Alkalimetallsalze, wie Lithium-, Natrium- oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Farbstoffe angegebenen Absorptionsmaxima (λₘₐₓ) im sichtbaren Bereich wurden anhand ihrer Alkalimetallsalze in wäßriger Lösung ermittelt. In den Tabellenbeispielen sind die λₘₐₓ-Werte bei der Farbtonangabe in Klammern gesetzt; die Wellenlängenangabe bezieht sich auf nm.

### Beispiel 1

Zu einer neutralen wäßrigen Lösung von 135 Teilen der Disazoverbindung 2-(4'-(β-Sulfatoethylsulfonyl-phenyl)-azo-7-(2''-sulfo-5-amino-phenyl)-azo-3,6-disulfo-1-amino-8-hydroxy-naphthalin in 1500 Teilen eines Gemisches aus Wasser und Eis werden innerhalb von ungefähr fünf Minuten unter kräftigem Rühren stetig 30 Teile Trifluortriazin unter Einhaltung eines pH-Wertes zwischen 5 und 6 mittels wäßriger Natronlauge gegeben. Man rührt den Ansatz noch 30 Minuten nach und gibt sodann 10,8 Teile Ammoniumchlorid hinzu, rührt weitere vier Stunden bei 0 bis 5°C und einem pH-Wert zwischen 8 und 9 weiter, stellt sodann den Ansatz mittels wäßriger Salzsäure auf einen pH-Wert von 6,5 und isoliert die erhaltene erfindungsgemäße Disazoverbindung der Formel (in Form der freien Säure geschrieben) 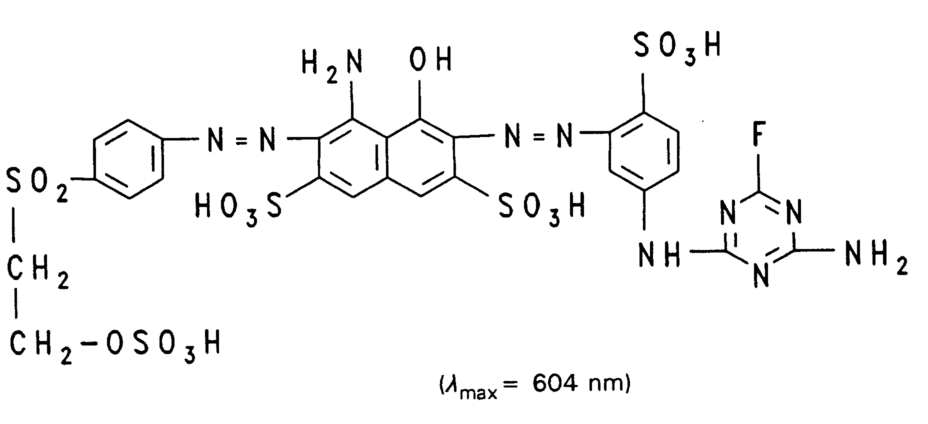
in üblicher Weise, beispielsweise durch Sprühtrocknung oder durch Aussalzen mit Natriumchlorid, als Alkalimetallsalz (Natriumsalz).

Die erfindungsgemäße Disazoverbindung besitzt sehr gute faserreaktive Farbstoffeigenschaften und liefert nach in der Technik für faserreaktive Farbstoffe üblichen Anwendungsverfahren auf den in der Beschreibung genannten Materialien, insbesondere auf cellulosefaserhaltigen Materialien, Färbungen und Drucke in tiefen marinenblauen Tönen mit guten Echtheitseigenschaften.

### Beispiel 2

Zu einer neutralen wäßrigen Lösung von 133 Teilen der Disazoverbindung 2-(4'-(Vinylsulfonyl-phenyl)-azo-7-(2''-sulfo-5-amino-phenyl)-azo-3,6-disulfo-1-amino-8-hydroxy-naphthalin in 1500 Teilen eines Gemisches aus Wasser und Eis werden innerhalb von ungefähr fünf Minuten unter Einhaltung eines pH-Wertes zwischen 5 und 6 mittels wäßriger Natronlauge und unter kräftigem Rühren stetig 30 Teile Trifluortriazin hinzugegeben. Man rührt den Ansatz noch 30 Minuten nach und gibt sodann 13,5 Teile Methylammoniumchlorid hinzu, rührt weitere vier Stunden bei 0 bis 5°C und einem pH-Wert zwischen 8 und 9 weiter, stellt sodann den Ansatz mittels wäßriger Salzsäure auf einen pH-Wert von 6,5 ein und isoliert die erhaltene erfindungsgemäße Disazoverbindung der Formel (in Form der freien Säure geschrieben) 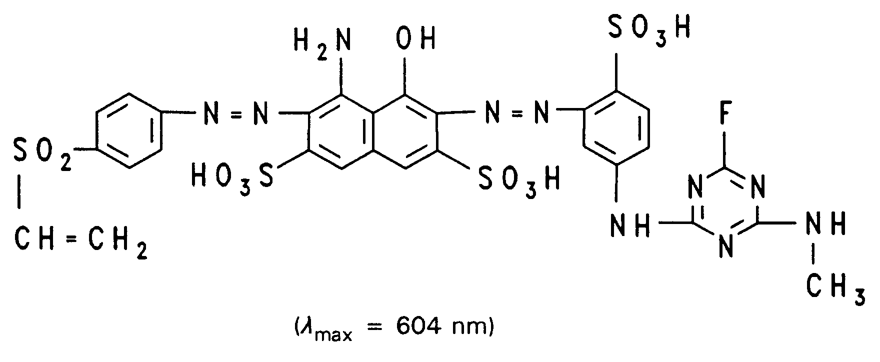
in üblicher Weise, beispielsweise durch Sprühtrocknung oder durch Aussalzen mit Natriumchlorid, als Alkalimetallsalz (Natriumsalz).

Die erfindungsgemäße Disazoverbindung besitzt sehr gute faserreaktive Farbstoffeigenschaften und liefert nach in der Technik für faserreaktive Farbstoffe üblichen Anwendungsverfahren auf den in der Beschreibung genannten Materialien, insbesondere auf cellulosefaserhaltigen Materialien, Färbungen und Drucke in tiefen marinenblauen Tönen mit guten Echtheitseigenschaften.

### Beispiel 3

In einem Kolben mit Destillationskolonne und Kühler wird eine Mischung aus 140 Teilen Kaliumfluorid und 500 Teilen Tetrahydrothiophen-1,1-dioxid (=Sulfolan) auf 120°C erhitzt und langsam mit einer Suspension von 193 Teilen 2,4-Dichlor-6-dimethylamino-1,3,5-triazin in 400 Teilen Sulfolan unter gutem Rühren versetzt. Man rührt noch etwa vier Stunden bei 150°C nach und isoliert das hergestellte 2,4-Difluor-6-dimethylamino-1,3,5-triazin in einer Ausbeute von 130 Teilen durch Destillation bei 94-95°C/17 mbar. Die Verbindung besitzt einen Schmelzpunkt von 72-73°C.

48 Teile dieser Difluorverbindung werden in eine Lösung von 10°C und einem pH-Wert von 6 von 56 Teilen 1,3-Diaminobenzol-4-sulfonsäure in 600 Teilen Wasser eingerührt, und die Umsetzung wird während etwa acht Stunden unter weiterem Rühren bei 10 bis 20°C und einem pH-Wert von 5 bis 7 zu Ende geführt. Das so erhaltene 2-(4'-Sulfo-3'-amino-phenylamino)-4-fluor-6-dimethylamino-1,3,5-triazin kann durch Aussalzen isoliert oder ohne weitere Zwischenisolierung zur Herstellung einer erfindungsgemäßen Disazoverbindung weiterverarbeitet werden.

56,2 Teile 4-(β-Sulfatoethylsulfonyl)-anilin werden in an und für sich bekannter Verfahrensweise diazotiert und mit 63 Teilen 1-Amino-8-naphthol-3,6-disulfonsäure bei einem pH-Wert von unterhalb 1,5 gekuppelt. Zu der so hergestellten Lösung der Monoazoverbindung wird die in an und für sich bekannter Verfahrensweise hergestellte Diazoniumsalzsuspension aus 33 Teilen des oben beschriebenen 2-(4'-Sulfo-3'-amino-phenylamino)-4-fluor-6-dimethylamino-1,3,5-triazins hinzugegeben und die Kupplungsreaktion während etwa vier Stunden bei 10 bis 15°C und einem pH-Wert zwischen 5 und 7 zu Ende geführt.

Die erfindungsgemäße Disazoverbindung der Formel (in Form der freien Säure geschrieben) 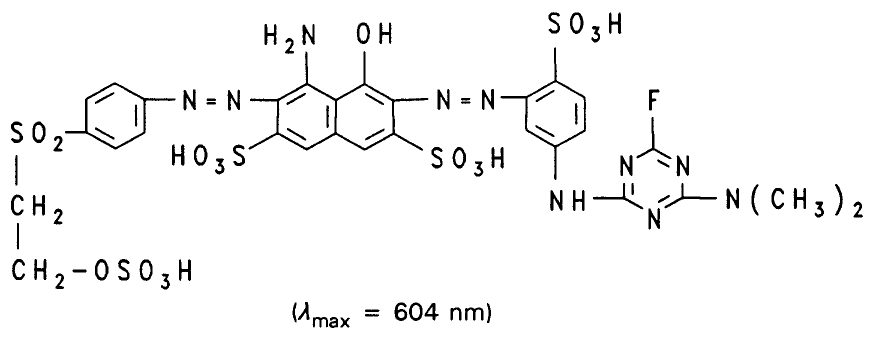
wird in üblicher Weise durch Aussalzen mit Natriumchlorid oder durch Sprühtrocknung als Alkalimetallsalz (Natriumsalz) isoliert.

Die erfindungsgemäße Disazoverbindung besitzt sehr gute faserreaktive Farbstoffeigenschaften und liefert nach in der Technik für faserreaktive Farbstoffe üblichen Anwendungsverfahren auf den in der Beschreibung genannten Materialien, insbesondere auf cellulosefaserhaltigen Materialien, Färbungen und Drucke in tiefen marinenblauen Tönen mit guten Echtheitseigenschaften.

### Beispiel 4

Man versetzt unter gutem Rühren eine Lösung von 0°C und einem pH-Wert von 6 von 56 Teilen 1,3-Diaminobenzol-4-sulfonsäure in 600 Teilen Wasser mit 45 Teilen 2,4-Difluor-6-methylamino-1,3,5-triazin (das gemäß den Angaben der französischen Patentschrift 1 561 876 hergestellt wird). Man rührt den Ansatz noch etwa sechs Stunden bei 10°C und einem pH-Wert zwischen 5 und 7 weiter und setzt das so erhaltene 2-(4'-Sulfo-3'-amino-phenylamino)-4-fluor-6-methylamino-1,3,5-triazin analog den Angaben des Beispieles 3 nach Überführung in das Diazoniumsalz mit der äquivalenten Menge an der Monoazoverbindung 2-(4'-β-Sulfatoethylsulfonyl-phenyl)-azo-3,6-disulfo-1-amino-8-hydroxy-naphthalin zur erfindungsgemäßen Disazoverbindung der Formel (in Form der freien Säure geschrieben) 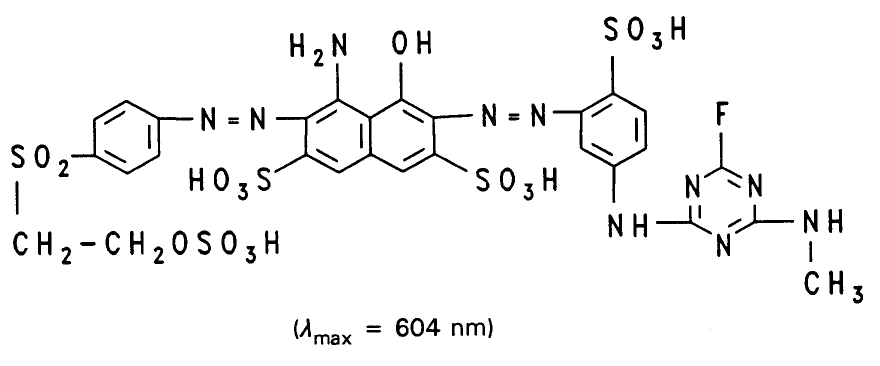
um. Sie wird als Alkalimetallsalz (Natriumsalz) durch Aussalzen mit Natriumchlorid oder durch Sprühtrocknung isoliert. Die erfindungsgemäße Disazoverbindung besitzt die gleichen guten Farbstoffeigenschaften wie die erfindungsgemäße Disazoverbindung des Beispieles 2.

### Beispiele 5 bis 16

In den nachfolgenden Tabellenbeispielen werden weitere erfindungsgemäße Disazoverbindungen entsprechend der allgemeinen Formel (A) 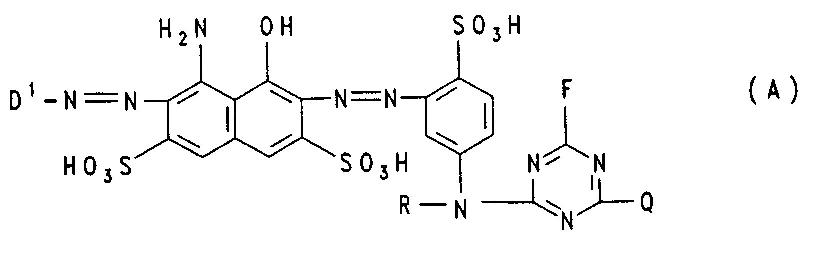
anhand ihrer Komponenten beschrieben. Sie lassen sich in erfindungsgemäßer Weise, beispielsweise analog den obengenannten Beispielen, aus den aus der allgemeinen Formel (A) ersichtlichen Ausgangsverbindungen (der Diazokomponente D¹-NH₂, 3,6-Disulfo-1 -amino-8-naphthol, einem gegebenenfalls N-alkyl-subsitutierten 2-Sulfo-1,3-phenylendiamin, Cyanurfluorid und einer Verbindung der Formel H-Q) herstellen. Sie besitzen sehr gute faserreaktive Farbstoffeigenschaften und färben die in der Beschreibung genannten Materialien, wie insbesondere Cellulosefasermaterialien, in dem in dem jeweiligen Tabellenbeispiel (hier für Baumwolle) angegebenen Farbton in hoher Farbstärke und guten Echtheiten.

| Disazoverbindung der Formel (A) | | | | |
|---|---|---|---|---|
| Bsp. | Rest D¹ | Rest R | Rest Q | Farbton |
| 5 | 4-(β-Sulfatoethylsulfonyl)-phenyl | Wasserstoff | Methylamino | marineblau (606) |
| 6 | dito | Wasserstoff | Dimethylamino | marineblau (604) |
| 7 | dito | Wasserstoff | Ethylamino | marineblau (605) |
| 8 | dito | Wasserstoff | n-Propylamino | marineblau (605) |
| 9 | dito | Wasserstoff | n-Butylamino | marineblau (604) |
| 10 | dito | Wasserstoff | γ-Methoxy-propylamino | marineblau (603) |
| 11 | dito | Wasserstoff | Diethylamino | marineblau (606) |
| 12 | 4-(Vinylsulfonyl)-phenyl | Methyl | Amino | marineblau |
| 13 | dito | Methyl | Dimethylamino | marineblau |
| 14 | dito | Methyl | Ethylamino | marineblau |
| 15 | dito | Ethyl | n-Propylamino | marineblau |
| 16 | dito | Methyl | β-Methoxy-methylamino | marineblau |

## Patentansprüche

1. Disazoverbindung der allgemeinen Formel (1) 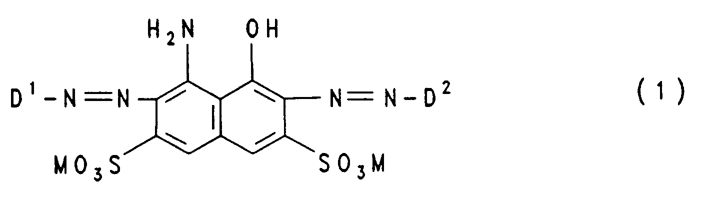 in welcher bedeuten:
M ist Wasserstoff oder ein Alkalimetall;
D¹ ist ein Rest der allgemeinen Formel (2a) oder (2b) 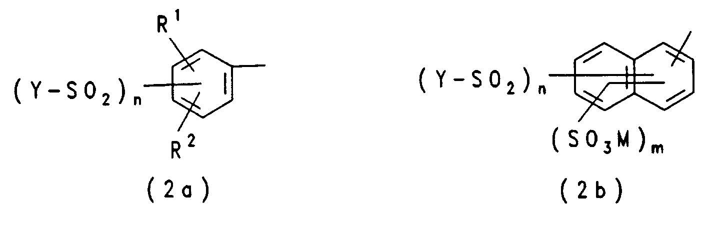
in welchen
Y Vinyl ist oder Ethyl ist, das in β-Stellung durch einen Substituenten substituiert ist, der durch Alkali unter Bildung der Vinylgruppe eliminierbar ist,
n die Zahl 1 oder 2 ist,
R¹ Wasserstoff, Halogen, Alkyl von 1 bis 4 C-Atomen, Alkoxy von 1 bis 4 C-Atomen, Sulfo oder Carboxy ist,
R² Wasserstoff, Chlor, Alkyl von 1 bis 4 C-Atomen oder Alkoxy von 1 bis 4 C-Atomen ist,
m die Zahl Null, 1 oder 2 ist (wobei im Falle von m gleich Null diese Gruppe Wasserstoff bedeutet) und
M die obengenannte Bedeutung besitzt;
D² ist eine Gruppe der allgemeinen Formel (3) 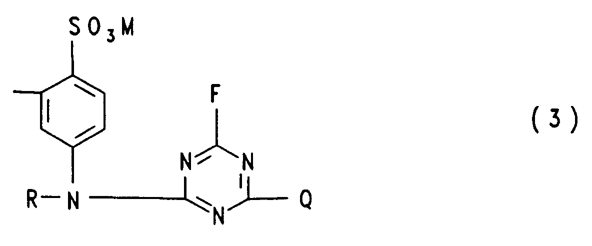
in welcher
M die obengenannte Bedeutung hat,
R Wasserstoff oder Alkyl von 1 bis 4 C-Atomen ist und
Q Alkoxy von 1 bis 4 C-Atomen oder Alkoxy von 2 bis 4 C-Atomen, das durch Alkoxy von 1 bis 4 C-Atomen substituiert ist, oder eine Gruppe der allgemeinen Formel (4) 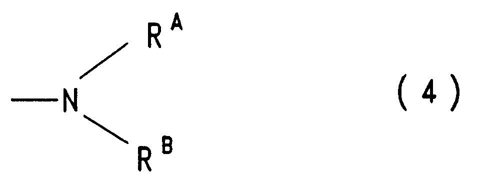
ist, in welcher
R^{A} Wasserstoff oder Alkyl von 1 bis 6 C-Atomen ist, das durch Alkoxy von 1 bis 4 C-Atomen substituiert sein kann, und
R^{B} eine der Bedeutungen von R^{A} hat oder die Gruppe -NR^{A}R^{B} den Rest eines gesättigten fünf- bis acht-gliedrigen, gegebenenfalls eine weitere Heterogruppe enthaltenden Heterocyclus bildet.

2. Disazoverbindung nach Anspruch 1, dadurch gekennzeichnet, daß n die Zahl 1 ist.

3. Disazoverbindung nach Anspruch 1 oder 2, dadurch gekennzeichnet, daß R gleich Wasserstoff ist.

4. Disazoverbindung nach mindestens einem der Ansprüche 1 bis 3, dadurch gekennzeichnet, daß D¹ eine Gruppe der allgemeinen Formel (2) ist, in welcher R¹ und R² jedes Wasserstoff bedeuten, n die Zahl 1 ist und die Gruppe Y-SO₂- in para-Stellung zur Azogruppe an den Benzolkern gebunden ist.

5. Disazoverbindung nach mindestens einem der Ansprüche 1 bis 4, dadurch gekennzeichnet, daß Q eine Aminogruppe der allgemeinen Formel -NR^{A}R^{B} der in Anspruch 1 angegebenen Bedeutung ist.

6. Disazoverbindung nach mindestens einem der Ansprüche 1 bis 5, dadurch gekennzeichnet, daß R^{A} Wasserstoff und R^{B} Alkyl von 1 bis 4 C-Atomen ist.

7. Verfahren zur Herstellung einer Disazoverbindung der allgemeinen Formel (1) von Anspruch 1, dadurch gekennzeichnet, daß man eine Aminoverbindung der allgemeinen Formel H₂N-D² mit D² der in Anspruch 1 genannten Bedeutung diazotiert und die erhaltene Diazoniumverbindung mit einer Azoverbindung der allgemeinen Formel (5) 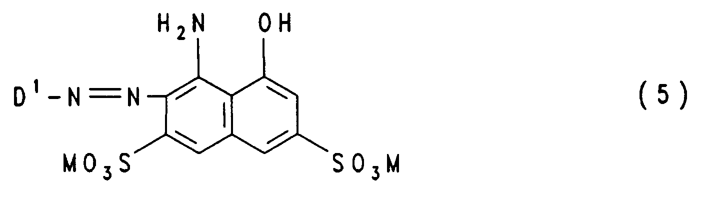 mit D¹ und M der in Anspruch 1 genannten Bedeutung kuppelt, oder daß man eine Verbindung der allgemeinen Formel (6) 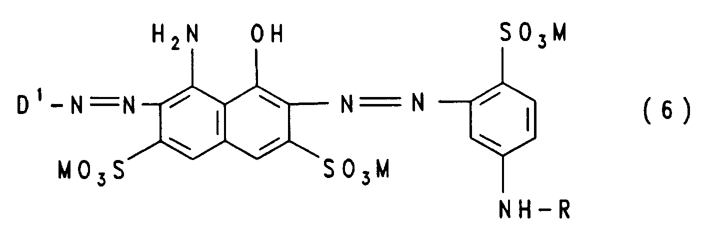 in welcher D¹, M und R die in Anspruch 1 genannten Bedeutungen haben, mit Cyanurfluorid (2,4,6-Trifluor-1,3,5-triazin) bei einer Temperatur zwischen -5°C und +20°C und einem pH-Wert zwischen 4 und 8 zur Difluor-triazinylamino-Disazoverbindung und diese anschließend mit einer Verbindung der allgemeinen Formel H-Q mit Q der obengenannten Bedeutung bei einer Temperatur zwischen -5°C und +20°C und bei einem pH-Wert zwischen 5 und 10 umsetzt, oder daß man eine Verbindung der allgemeinen Formel (6) mit einer Verbindung der allgemeinen Formel (7) 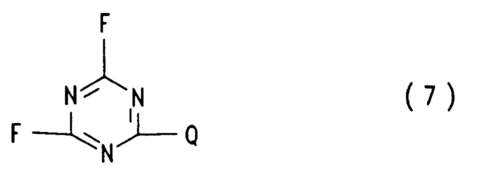 in welcher Q die in Anspruch 1 genannte Bedeutung besitzt, bei einem pH-Wert zwischen 3 und 8 und bei einer Temperatur zwischen 5 und 20°C umsetzt.

8. Verwendung einer Disazoverbindung von Anspruch 1 oder einer nach Anspruch 7 hergestellten Disazoverbindung zum Färben (einschließlich Bedrucken) von hydroxy- und/oder carbonamidgruppenhaltigem Material, insbesondere Fasermaterial.

9. Verfahren zum Färben (einschließlich Bedrucken) von hydroxy- und/oder carbonamidgruppenhaltigem Material, insbesondere Fasermaterial, bei welchem man einen Farbstoff auf das Material aufbringt und den Farbstoff auf dem Material mittels Wärme oder mit Hilfe eines alkalisch wirkenden Mittels oder mittels beider Maßnahmen fixiert, dadurch gekennzeichnet, daß man als Farbstoff eine Disazoverbindung von Anspruch 1 oder eine nach Anspruch 7 hergestellte Disazoverbindung einsetzt.
